# EUROPÄISCHE PATENTSCHRIFT

(11) **EP 0 543 358 B1**
(45) Veröffentlichungstag und Bekanntmachung des Hinweises auf die Patenterteilung: **13.12.1995**
(21) Anmeldenummer: 92119681.2
(22) Anmeldetag: 19.11.1992
(51) Int. Cl.: C02F 9/00, E21B 43/08, E21B 43/04, E21B 43/38, E21B 43/40, C02F 3/04, C02F 3/12

(54) **Anordnung zum Reinigen von verunreinigtem Grundwasser**
Arrangement for the cleaning of polluted ground water
Dispositif pour l'épuration de l'eau souterraine contaminée

(30) Priorität: 22.11.1991 DE 4138414
(43) Veröffentlichungstag der Anmeldung: 26.05.1993
(73) Patentinhaber: IEG Industrie-Engineering GmbH, D-72770 Reutlingen (DE)
(72) Erfinder: Bernhardt, Bruno, W-7410 Reutlingen (DE)
(74) Vertreter: Möbus, Rudolf, Dipl.-Ing.

(56) Entgegenhaltungen:
- EP-A- 0 437 805
- AT-A- 390 643
- DE-C- 3 931 012
- PATENT ABSTRACTS OF JAPAN vol. 11, no. 48 (M-561)13. Februar 1987

## Beschreibung

Die Erfindung betrifft eine Anordnung zum Reinigen von verunreinigtem Grundwasser mit den im Oberbegriff des Hauptanspruches aufgeführten Merkmalen. Eine solche Anordnung ist aus der DE-PS 39 31 012 der Anmelderin bekannt.

Aus der DE-OS 36 12 468 ist es bei einem Filterbrunnen bekannt, ein Bohrloch nach dem Entsanden mit Filterkies auszufüllen.

Der Erfindung liegt die Aufgabe zugrunde, eine Anordnung gemäß dem Oberbegriff des Hauptanspruches so auszubilden, daß ihr Anwendungsbereich erweitert und ihre Handhabung erleichtert wird.

Die gestellte Aufgabe wird mit der Anordnung erfindungsgemäß mit den aus dem kennzeichnenden Teil des Hauptanspruches ersichtlichen Merkmalen gelöst.

Bei der erfindungsgemäß ausgebildeten Anordnung laßt sich das befürchtete Zuwachsen der Filter durch Ausfällungen aus dem Grundwasser, Algenbewuchs o. dgl. vermeiden, weil sich das schütt- und rieselfähige Material in Bewegung halten läßt. Dies kann bereits durch die mittels der Umwälzpumpe erzeugte Grundwasserströmung erreicht werden, insbesondere aber über Rohre, die durch die zusätzlichen Durchgänge durch den Trennungsbereich in den Filterraum einführbar sind. So kann durch zeitweiliges Einbringen von Preßluft eine Aufwirbelung der gesamten Filterschüttfüllung erreicht werden, so daß diese Filterfüllung nicht zusetzen und nicht verbacken kann. Die Preßluft kann dabei zweckmäßig über einen Düsenkörper in die Filterfüllung eintreten, mit dessen Düsenwandung der Schachtraum nach unten begrenzt sein kann und in welchen über einen nach außen geführten Gaszuleitungskanal normalerweise Luft oder andere Behandlungsgase, auch mit Nährstoffen für Mikroben versetzte Gase, eingeleitet werden, die dann durch die Filterschüttfüllung hindurch aufsteigen und durch in dem Trennungsbereich, insbesondere einer Trennwandung, ausgebildete kleine Öffnungen in den oberen Schachtraum ausdringen können, soweit sie nicht in den Strömungsweg des Grundwassers eingezogen werden.

Der für die Ausbildung eines geordneten Grundwasserkreislaufes erforderliche Trennungsbereich kann auf unterschiedliche Weise geschaffen werden, wobei bei der Wahl der Mittel spezielle Bedingungen am Einsatzort eine Rolle spielen. So kann der Trennungsbereich beispielsweise durch eine einzelne Durchtrittsöffnungen aufweisende Trennwandung gebildet sein. In vielen Anwendungsfällen genügt auch eine einfache Siebwandung, die einen Strömungswiderstand für das Grundwasser bildet und durch welche bei einer zusätzlichen Gasbehandlung des Grundwassers im Schachtbereich auch das Gas nach oben hindurchtreten kann. Es genügt aber auch bereits ein Trennungsbereich, der durch eine mindestens teilweise verdichtete Anordnung des eingebrachten Filtermaterials geschaffen ist und somit eine größere Dichte aufweist, als das den Schacht umgebende Erdreich, durch welches der Grundwasserkreislauf hindurchführt.

Die Anordnung kann erfindungsgemäß so ausgebildet werden, daß laufend oder in bestimmten Zeitabständen ein Auswechseln des Filtermaterials vorgenommen werden kann, ohne daß hierzu der Grundwasserkreislauf unterbrochen und die Schachteinsatzteile ausgebaut werden müssen. Hierzu können in die zusätzlichen Durchgänge durch den Trennungsbereich ein von außen bis zum Boden des mit Filtermaterial gefüllten Schachtbereiches geführtes Saugrohr zum Absaugen von Filtermaterial und ein dicht unterhalb des Trennungsbereiches endendes Einlaufrohr für die Eingabe von Filtermaterial und den Rücklauf zusammen mit dem Filtermaterial abgesaugten Grundwassers eingesetzt sein. Einsatzbereich und Wirkungsgrad der Anordnung lassen sich noch dadurch erhöhen, daß die Anordnung an dem den Filterschüttraum begrenzenden wasserdurchlässigen Schachtwandungsbereich mit einem ebenfalls wasserdurchlässigen Heizmantel versehen ist, der mindestens zeitweilig ein Erwärmen des Grundwassers erlaubt.

Nachfolgend werden vier Ausführungsbeispiele des Erfindungsgegenstandes anhand der beiliegenden Zeichnung näher erläutert.

Im einzelnen zeigen:
- Fig. 1: einen schematischen Längsschnitt durch ein erstes Ausführungsbeispiel einer in einen gebohrten Brunnenschacht eingebrachten Anordnung;
- Fig. 2: einen der Fig. 1 entsprechenden schematischen Längsschnitt durch ein zweites Ausführungsbeispiel der Anordnung;
- Fig. 3: einen der Fig. 1 entsprechenden schematischen Längsschnitt durch ein drittes Ausführungsbeispiel der Anordnung;
- Fig. 4: einen der Fig. 1 entsprechenden schematischen Längsschnitt durch ein viertes Ausführungsbeispiel der Anordnung.

In den Figuren sind gleiche Teile alle mit den gleichen Bezugsziffern bezeichnet.
In einen verunreinigten Bodenbereich 10, der bis zu einem Spiegel 11 mit Grundwasser durchsetzt ist, ist ein Schacht 12 gebohrt. Die in den Schacht 12 einsetzbare Anordnung zum Reinigen besteht aus einem Rohrkörper 13, der einen oberen wasserdurchlässigen Wandungsabschnitt 13.1 und einen unteren wasserdurchlässigen Wandungsabschnitt 13.2 aufweist, die sich beide über den ganzen Umfang des Rohrkörpers 13 erstrecken. Die wasserdurchlässigen Wandungsabschnitte können durch Siebrohrabschnitte gebildet sein. Bei den beiden dargestellten Ausführungsbeispielen sind diese wasserdurchlässigen Wandungsabschnitte 13.1 und 13.2 jeweils mit einem Siebmantel 14 aus Metall oder Kunststoff umgeben, welcher in erster Linie das Eindringen von Festkörpern in das Innere des Rohrkörpers 13 verhindern soll. Die obere Öffnung des Rohrkörpers 13 ist mittels eines Deckels 15 verschlossen; sein unteres Ende ist mit einem geschlossenen Boden 16 versehen.

In den Rohrkörper 13 ist unterhalb des Grundwasserspiegels 11 eine Trennwandung 17 eingesetzt. Diese Trennwandung ist bei den dargestellten Ausführungsbeispielen durch den Boden eines topfartigen Einsatzkörpers 19 gebildet, an dessen Außenmantel zwei aufblasbare Klemmschläuche 20 angeordnet sind, die sich zum Halten der Trennwandung 17 an der gewünschten Stelle aufblasen lassen. Die Trennwandung 17 weist eine zentrale Öffnung auf, in welche ein rohrförmiger Durchgangskanal 18 eingesetzt ist, dessen obere Öffnung 18.1 oberhalb des normalen Grundwasserspiegels 11 im Bereich des oberen wasserdurchlässigen Wandungsabschnittes 13.1 des Rohrkörpers 13 liegt. Innerhalb des Durchgangskanales 18 ist eine elektrisch betriebene Umwälzpumpe 21 angeordnet. Der unterhalb der Trennwandung 17 befindliche Teil 18.2 des rohrförmigen Durchgangskanales ist über einen weiten Teil mit Durchgangsöffnungen 22 versehen und von einem Wickelnetzfilter 23 umgeben, das die Durchlässigkeit des unteren Durchgangskanalbereiches auf Flüssigkeiten und Gase beschränkt, den Eintritt von schütt- und rieselbarem Filtermaterial 24, mit welchem der unterhalb der Trennwandung 17 befindliche Innenraum des Rohrkörpers 13 weitgehend aufgefüllt ist, aber verhindert.

Am unteren Ende des rohrförmigen Durchgangskanales 18 ist ein flacher Düsenkörper 25 befestigt, dessen obere Begrenzungswandung als Düsenwandung 26 ausgebildet ist und der über eine entlang der Schachtwandung und durch den Schachtdeckel 15 hindurch nach außen geführte Schlauchleitung 27 mit einer nicht dargestellten Gasquelle verbindbar ist. Auch der Düsenkörper 25 kann an seinem Umfang mit einem aufblasbaren Klemmschlauch 20 versehen sein. In diesem Fall kann der Boden 16 des Rohrkörpers entfallen und ist eine Längsverstellbarkeit des aus der Trennwandung 17, dem Durchgangskanal 18 und dem Düsenkörper 25 bestehenden Schachteinsatzteils über einen beliebig großen Bereich zur Anpassung an einen wechselnden Grundwasserspiegel 11 möglich.

Durch den Betrieb der Umwälzpumpe 21 wird das durch den Wickelnetzmantel 23 und die Öffnungen 22 in den unteren Teil 18.2 des Durchgangskanales 18 einfließende Grundwasser durch die Trennwandung 17 hindurch in den oberen Schachtbereich gefördert und dadurch Grundwasser aus dem umliegenden Erdreich 10 durch den unteren wasserdurchlässigen Wandungsabschnitt 13.2 in die im unteren Rohrkörperbereich angeordnete Filterschüttfüllung 24 nachgesaugt. Das hochgeförderte Grundwasser bildet im Rohrkörper 13 einen erhöhten Wasserspiegel 11.1 und fließt durch den oberen wasserdurchlässigen Wandungsbereich 13.1 des Rohrkörpers 13 wieder in das umgebende Erdreich 10 aus. Über die Schlauchleitung 27 in den Düsenkörper 25 eingeleitete Luft oder ein anderes Behandlungsgas dringt durch die Düsenwandung 26 in die Filterschüttfüllung 24 aus, wird teilweise von dem durchströmenden Grundwasser in den Durchgangskanal 18 mitgenommen oder tritt durch kleine Öffnungen 28 in der Trennwandung 17 in den oberen Teil des Rohrkörpers 13 aus. Das Gas kann zur Behandlung des Grundwassers, etwa zum zusätzlichen Austreiben leichtflüchtiger Verunreinigungen aus dem Grundwasser oder zur Versorgung von in der Filterschüttfüllung vorhandener Mikroben usw., eingesetzt werden. Es dient aber auch insbesondere dazu, die Filterschüttfüllung in Bewegung zu halten, so daß sie sich nicht zusetzen kann. Durch das zeitweilige Einbringen von Preßluft in den Düsenkörper 25 kann eine sehr starke Aufwirbelung der gesamten Filterschüttfüllung erreicht werden.

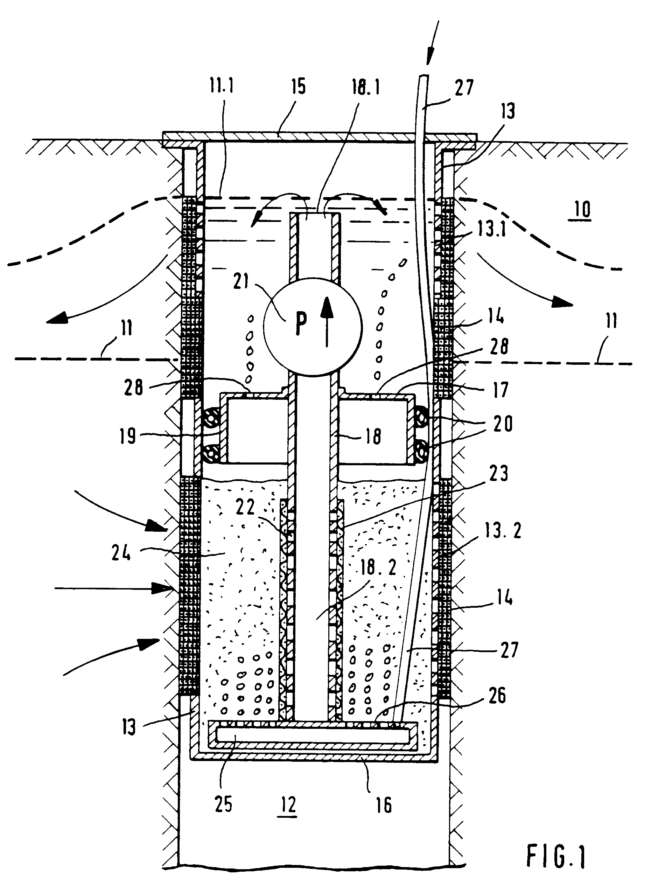

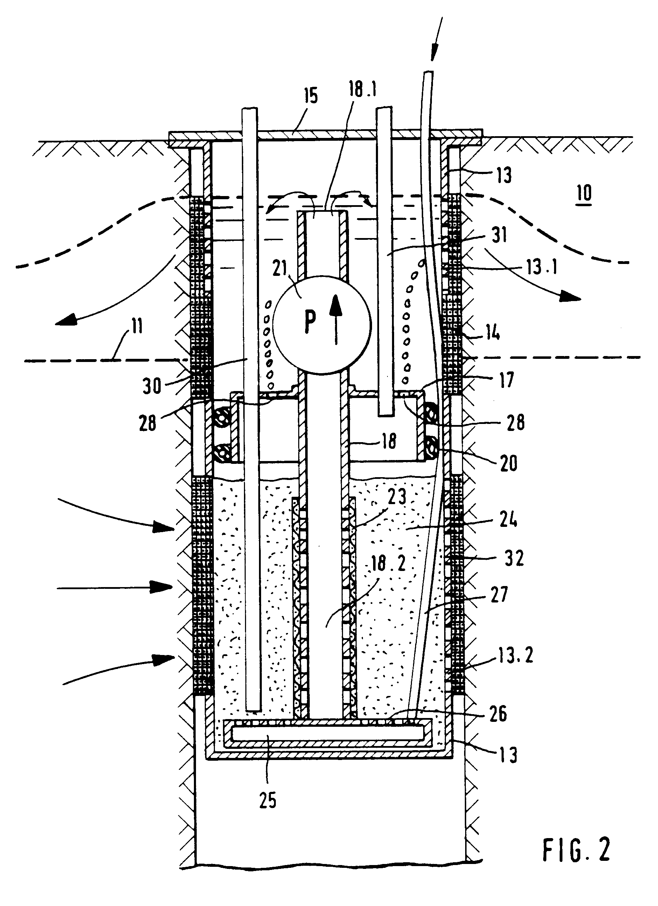

Die Anordnung nach Fig. 2 unterscheidet sich von dem Ausführungsbeispiel nach Fig. 1 durch ein zusätzliches Saugrohr 30, das von außen durch den Deckel 15 und die innere Trennwandung 17 hindurch bis in den Bodenbereich des Rohrkörpers 13, hier bis vor die Düsenwandung 26 des Düsenkörpers 25, geführt ist. Außerdem ist ein Einlaufrohr 31 vorgesehen, das von außen durch den Deckel 15 und die Trennwandung 17 hindurchgeführt ist und dicht unterhalb der Trennwandung 17 endet. Mit dem Saugrohr 30 läßt sich mittels einer nicht dargestellten Absaugeinrichtung, die Teil einer Filterregeneriereinrichtung sein kann, das schütt- und rieselfähige Filtermaterial der Filterschüttfüllung 24 aus dem Rohrkörper absaugen. Durch das Einlaufrohr 31 läßt sich dabei mitentferntes Grundwasser in den Schacht zurückleiten und neues oder regeneriertes Filtermaterial einfüllen. Dabei ist auch ein laufendes Absaugen und Nachfüllen von Filtermaterial möglich.

Bei dem Ausführungsbeispiel nach Fig. 2 ist an dem unteren wasserdurchlässigen Wandungsbereich 13.2 des Rohrkörpers 13 ein ebenfalls wasserdurchlässiger Heizmantel 32 angeordnet, der beispielsweise zeitweilig und elektrisch beheizbar ist und zur Erwärmung des einströmenden Grundwassers zwecks Erhöhung der Reinigungswirkung dient.

Bei den Anordnungen ist die durch die Klemmschläuche 20 sich ergebende vollständige Abdichtung der Trennwandung 17 gegenüber der Wandung des Rohrkörpers 13 nicht unbedingt erforderlich. Die Trennwandung 17 könnte auch auf andere, weniger dichte Weise im Rohrkörper 13 gehalten sein.

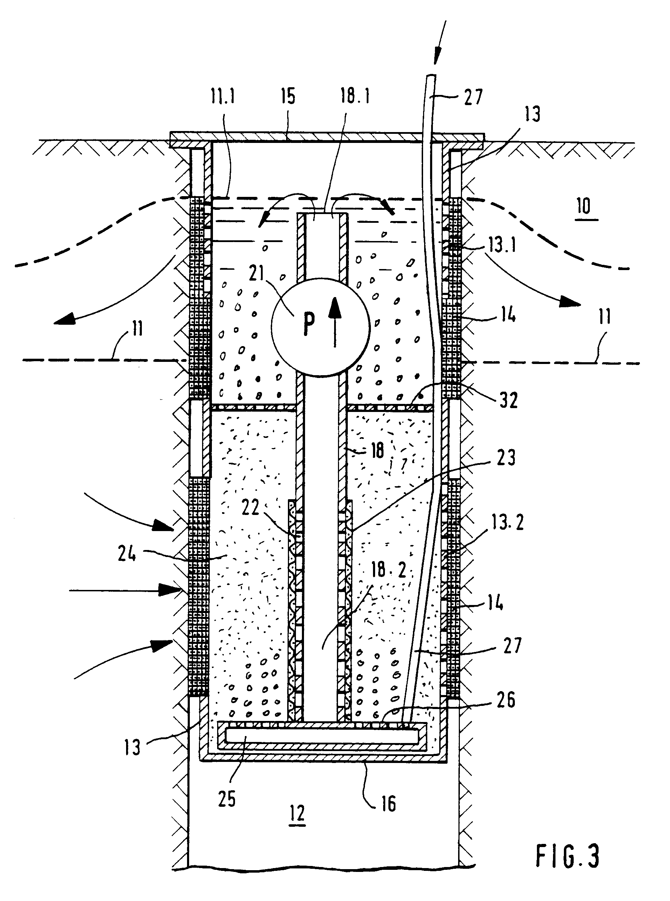

Beim Ausführungsbeispiel nach Fig. 3 ist die eingesetzte Trennwandung 17 durch eine einfache Siebwandung 32 ersetzt. Diese Siebwandung ist gegenüber der Schachtwandung nicht abgedichtet. Sie kann je nach Anwendungsfall an dem rohrförmigen Durchgangskanal 18 befestigt oder auch lose auf die Filterschüttfüllung 24 aufgelegt sein. Diese Siebwandung 32, durch welche Behandlungsgas und auch ein Grundwasseranteil nach oben hindurchtreten kann, bildet einen Strömungswiderstand für das Grundwasser, der größer ist als im übrigen Grundwasser-Kreislaufbereich. Damit ist sichergestellt, daß der Großteil des in einen Kreislauf gezwungenen Grundwassers in gewünschter Weise durch die Filterschüttfüllung 24 hindurch in den Durchgangskanal 18 eintritt.

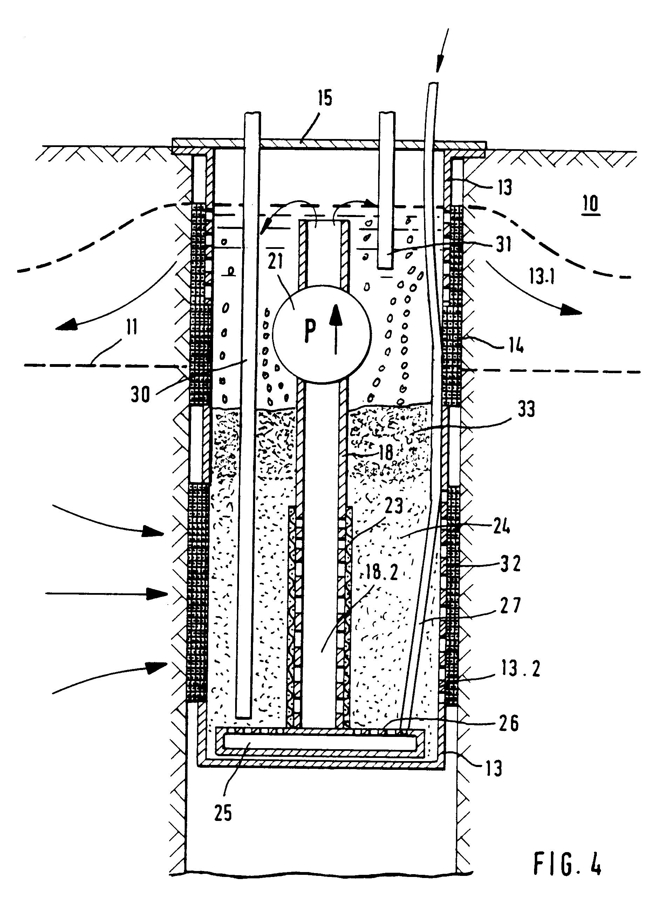

Bei der Ausführungsform nach Fig. 4 ist auf eine Trennwandung ganz verzichtet und wird der Trennungsbereich durch eine verdichtete obere Lage 33 der Filterschüttfüllung 24 gebildet. In diesem Falle kann das Einlaufrohr 31 im Gegensatz zum Ausführungsbeispiel nach Fig. 2 auch oberhalb des Trennungsbereiches enden, weil hier keine ein Einbringen von schütt- und rieselfähigem Filtermaterial verhindernde Wandung vorhanden ist. Die Bildung der verdichteten Filterschicht 33 läßt sich von der oberen Öffnung des Rohrkörpers her mit passenden Werkzeugen oder hydraulischem oder pneumatischem Druck so bewirken, daß die Dichte des Filtermaterials in diesem Trennungsbereich größer ist als im umgebenden Erdreich.

## Patentansprüche

1. Anordnung zum Reinigen von verunreinigtem Grundwasser und von dem von ihm durchströmten Erdreich, mit einem bis in den Bereich des zu reinigenden Grundwassers getriebenen Schacht (12) mit zwei voneinander entfernten, oberhalb und unterhalb des Grundwasserspiegels angeordneten wasserdurchlässigen Bereichen (13.1, 13.2) der Schachtwandung, zwischen denen im Schacht unterhalb des Grundwasserspiegels (11) ein Trennungsbereich ausgebildet ist, durch welchen ein Durchgangskanal (18) hindurchgeführt ist, der oberhalb des Grundwasserspiegels im Schacht endet und der Teil des Strömungsweges einer im Schacht angeordneten Umwälzpumpe (21) ist, die einen Grundwasserkreislauf bewirkt, der durch den Schacht, über die wasserdurchlässigen Schachtwandungsbereiche (13.1, 13.2), durch das umgebende Erdreich (10) und über im Schacht angeordnete Filter fließt, dadurch gekennzeichnet, daß ein unterhalb des Trennungsbereiches befindlicher Schachtraum mit einem schütt- und rieselfähigen Filtermaterial (24) ausgefüllt ist, in welche Filterschüttfüllung ein rohrförmiger Durchgangskanal (18) mit einem für das Grundwasser, aber nicht für das Filtermaterial durchlässigen Abschnitt (18.2) ragt, und das durch den Trennungsbereich mindestens ein zusätzlicher Durchgang für ein von außen zur Beeinflussung des Grundwassers oder des rieselfähigen Filtermaterials eingeführtes Rohr geschaffen ist.

2. Anordnung nach Anspruch 1, dadurch gekennzeichnet, daß der mit Filtermaterial (24) gefüllte Schachtraum nach unten durch die Düsenwandung (26) eines Düsenkörpers begrenzt ist, in welchen ein durch den Schacht und eine durch den Trennungsbereich nach außen geführter Gaszuleitungskanal (27) endet, und daß der Trennungsbereich kleine Öffnungen für einen Gasdurchtritt aufweist.

3. Anordnung nach Anspruch 1 und 2, dadurch gekennzeichnet, daß der Gaszuleitungskanal (27) mit einer Druckluftquelle verbunden ist.

4. Anordnung nach einem der Ansprüche 1 bis 3, dadurch gekennzeichnet, daß der Trennungsbereich durch eine einzelne Durchtrittsöffnungen aufweisende Trennwandung (17) gebildet ist.

5. Anordnung nach einem der Ansprüche 1 bis 3, dadurch gekennzeichnet, daß der Trennungsbereich durch eine einen Strömungswiderstand bildende Siebwandung (32) gebildet ist.

6. Anordnung nach einem der Ansprüche 1 bis 3, dadurch gekennzeichnet, daß der Trennungsbereich durch eine mindestens teilweise verdichtete Anordnung (33) des eingebrachten Filtermaterials (24) geschaffen ist.

7. Anordnung nach einem der Ansprüche 1 bis 6, dadurch gekennzeichnet, daß durch die zusätzlichen Durchgänge des Trennungsbereiches ein von außen bis zum Boden des mit Filtermaterial (24) gefüllten Schachtbereiches geführtes Saugrohr (30) zum Absaugen von Filtermaterial und ein dicht unterhalb des Trennungsbereiches endendes Einlaufrohr (31) für die Eingabe von Filtermaterial und den Rücklauf von zusammen mit dem Filtermaterial abgesaugtem Grundwasser geführt sind.

8. Anordnung nach einem der Ansprüche 1 bis 7, dadurch gekennzeichnet, daß sie an dem den Filterschüttraum begrenzenden wasserdurchlässigen Schachtwandungsbereich (13.2) mit einem ebenfalls wasserdurchlässigen Heizmantel (32) versehen ist.

## Claims

1. Arrangement for cleaning polluted ground water and the ground through which it flows, comprising a shaft (12) which is driven into the region of the ground water to be cleaned and which has two shaft wall regions (13.1, 13.2) which are permeable to water and are arranged at a distance from one another above and below the ground water level and between which there is formed in the shaft, below the ground water level (11), a separation region through which is passed a through duct (18) which ends above the ground water level in the shaft and is part of the flow path of a circulation pump (21) which is arranged in the shaft and brings about a circulation flow of ground water through the shaft, across the shaft wall regions (13.1, 13.2) permeable to water, through the surrounding ground (10) and across filters arranged in the shaft, characterized in that a shaft chamber situated beneath the separation region is filled with a pourable, free-flowing filter material (24), into which poured filter filling a tubular through duct (18) projects, said duct having a portion (18.2) which is permeable to the ground water but not to the filter material, and in that at least one additional passage for a tube, which is introduced from outside in order to act on the ground water or the free-flowing filter material, is formed through the separation region.

2. Arrangement according to Claim 1, characterized in that the shaft chamber filled with filter material (24) is bounded at the bottom by the nozzle wall (26) of a nozzle body terminating a gas supply duct (27) passed to the outside through the shaft and through the separation region, and in that the separation region has small openings for the passage of gas.

3. Arrangement according to Claim 1 and 2, characterized in that the gas supply duct (27) is connected to a compressed air source.

4. Arrangement according to one of Claims 1 to 3, characterized in that the separation region is formed by a single separating wall (17) having through openings.

5. Arrangement according to one of Claims 1 to 3, characterized in that the separation region is formed by a sieve wall (32) offering resistance to flow.

6. Arrangement according to one of Claims 1 to 3, characterized in that the separation region is formed by an at least partly compressed arrangement (33) of the filter material (24) introduced.

7. Arrangement according to one of Claims 1 to 6, characterized in that a suction pipe (30) which extends from the outside to the bottom of the shaft region filled with filter material (24), for drawing off filter material, and an inlet pipe (31) which ends close below the separation region, for introducing filter material and returning ground water drawn off together with the filter material, are passed through the additional passages of the separation region.

8. Arrangement according to one of Claims 1 to 7, characterized in that in the shaft wall region (13.2), which is permeable to water and bounds the chamber for the poured filter material, it is provided with a heating jacket (32) which is likewise permeable to water.

## Revendications

1. Dispositif pour le nettoyage d'eau souterraine polluée et de la terre parcourue par celle-ci, avec un puits (12) entraîné jusque dans la zone de l'eau souterraine à nettoyer, avec deux zones de la paroi de puits perméables à l'eau (13.1, 13.2), éloignées l'une de l'autre, disposées au-dessus et au-dessous du niveau d'eau souterraine, entre lesquelles est formée dans le puits au-dessous du niveau d'eau souterraine (11) une zone de séparation à travers laquelle est conduit un canal de passage (18) qui se termine au-dessus du niveau d'eau souterraine dans le puits et qui est une partie de la trajectoire d'écoulement d'une pompe de circulation (21) disposée dans le puits, laquelle provoque un circuit d'eau souterraine qui s'écoule à travers le puits, par les zones de paroi de puits perméables à l'eau (13.1, 13.2), à travers la terre environnante (10) et par des filtres disposés dans le puits, caractérisé en ce qu'un espace de puits situé au-dessous de la zone de séparation est rempli d'un matériau filtrant (24) en vrac et coulant, dans la charge de produit en vrac filtrant duquel un canal de passage en forme de tube (18) dépasse avec une section (18.2) perméable à l'eau souterraine mais pas au matériau filtrant et en ce qu'à travers la zone de séparation il est créé au moins un passage supplémentaire pour un tube introduit de l'extérieur pour influencer l'eau souterraine ou le matériau filtrant coulant.

2. Dispositif selon la revendication 1, caractérisé en ce que l'espace de puits rempli de matériau filtrant (24) est délimité vers le bas par la paroi à buses (26) d'un corps à buses dans lequel se termine un canal d'amenée de gaz (27) conduit vers l'extérieur à travers le puits et à travers la zone de séparation, et en ce que la zone de séparation présente de petites ouvertures pour un passage de gaz.

3. Dispositif selon les revendications 1 et 2, caractérisé en ce que le canal d'amenée de gaz (27) est relié à une source d'air comprimé.

4. Dispositif selon l'une des revendications 1 à 3, caractérisé en ce que la zone de séparation est formée par une paroi de séparation (17) présentant différentes ouvertures de passage.

5. Dispositif selon l'une des revendications 1 à 3, caractérisé en ce que la zone de séparation est formée par une paroi perforée (32) formant une résistance à l'écoulement.

6. Dispositif selon l'une des revendications 1 à 3, caractérisé en ce que la zone de séparation est créée par un dispositif (33) rendu étanche au moins partiellement du matériau filtrant introduit (24).

7. Dispositif selon l'une des revendications 1 à 6, caractérisé en ce qu'un tube d'aspiration (30) conduit de l'extérieur jusqu'au fond de la zone de puits remplie de matériau filtrant (24) pour l'aspiration de matériau filtrant et un tube d'entrée (31) se terminant juste au-dessous de la zone de séparation pour l'alimentation en matériau filtrant et le retour d'eau souterraine aspirée ensemble avec le matériau filtrant sont conduits à travers les passages supplémentaires de la zone de séparation.

8. Dispositif selon l'une des revendications 1 à 7, caractérisé en ce qu'il est muni sur la zone de paroi de puits perméable à l'eau (13.2) délimitant l'espace de matériau en vrac du filtre d'une gaîne chauffante (32) également perméable à l'eau.
